# FASCICULE DE BREVET EUROPEEN

(11) **EP 2 199 161 B1**
(45) Date de publication et mention de la délivrance du brevet: **04.05.2016**
(21) Numéro de dépôt: 09178469.4
(22) Date de dépôt: 09.12.2009
(51) Int. Cl.: B60T 7/04, B60T 8/48, B60T 11/20, B60T 11/24, B60T 13/14, B60T 13/58, B60T 13/68, B60T 15/36, B60T 17/04

(54) **Système de simulation de sensation de freinage et véhicule comportant un tel système**
Simulationssystem des Bremsgefühls und Fahrzeug mit einem solchen System
Braking force feeling simulation system and vehicle including such a system

(30) Priorité: 22.12.2008 FR 0807421
(43) Date de publication de la demande: 23.06.2010
(73) Titulaire: Robert Bosch GmbH, 70442 Stuttgart (DE)
(72) Inventeur: Leboube, Christophe, 77173 Chevry Cossigny (FR); Marlhe, Nicolas, 95670 MARLY LA VILLE (FR); Piel, Jean-Marc, 93190 LIVRY GARGAN (FR)

(56) Documents cités:
- EP-A1- 1 634 787
- WO-A2-02/087939
- FR-A1- 2 772 706
- FR-A1- 2 872 763
- FR-A1- 2 874 880

## Description

### Domaine de l'invention

L'invention concerne un système de simulation de sensation de freinage à la pédale de frein. Elle est plus particulièrement applicable à un véhicule équipé d'un système de freinage automatique. Elle est également applicable à un véhicule équipé d'un système de freinage classique dans lequel la pédale de frein agit sur le circuit de freinage hydraulique des roues du véhicule et d'un système de freinage à énergie auxiliaire tel qu'un système de freinage électrique. Elle est donc notamment applicable aux véhicules à traction hybride tels que les véhicules à traction mixte comportant un moteur à combustion interne et un ou plusieurs moteurs électriques.

### Etat de la technique

Il est connu d'équiper des véhicules d'un système de ralentissement du véhicule qui est commandé, par exemple, en fonction d'informations fournies par un système de détection tel qu'un radar. Un tel système est connu par exemple par le document FR 2 874 880 A1.

Il est également connu d'équiper des véhicules de deux systèmes de freinage commandés par le même dispositif de commande (pédale de frein), et agissant sur les roues du véhicule à l'aide de sources d'énergies différentes.

Avec ces systèmes, le véhicule est freiné sans que le conducteur ne perçoive physiquement une sensation de freinage par l'intermédiaire de la pédale de frein de la même façon que dans un système de freinage classique où il ressent une réaction de freinage lorsqu'il appuie sur la pédale de frein.

Les véhicules possédant deux systèmes de freinage sont notamment des véhicules hybrides à traction mixte possédant un moteur de traction à combustion interne et des moteurs de traction électriques. Dans ces véhicules, il est connu d'utiliser les moteurs électriques pour le freinage en les faisant fonctionner en génératrices électriques, le freinage se faisant alors par récupération d'énergie.

Le véhicule comporte un système de freinage électrique par récupération d'énergie mais il comporte aussi généralement un système de freinage hydraulique classique car l'effort de freinage du système de freinage électrique est limité et à vitesse réduite, il devient très faible.

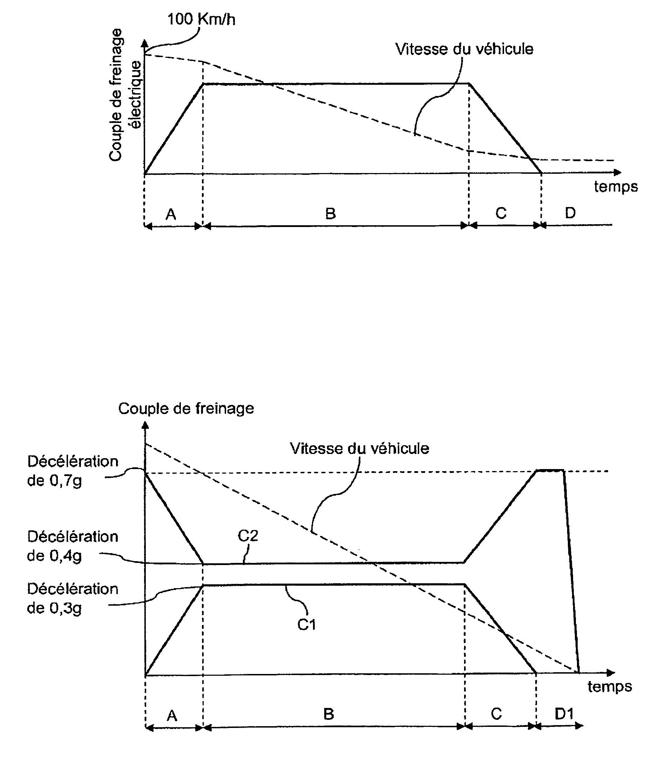

Cependant, le freinage électrique ne donne pas toujours entièrement satisfaction. La figure 1 représente de manière schématique, en trait continu, une courbe de freinage (couple de freinage en fonction du temps) d'un tel système de freinage électrique seul. Sur ce même graphique, on a représenté en pointillés la vitesse du véhicule. Dans une première zone de freinage A, le freinage augmente progressivement jusqu'à atteindre sa pleine efficacité dans une deuxième zone de freinage B, puis lorsque la vitesse du véhicule devient faible, dans une troisième zone C, le couple de freinage diminue, et devient quasi inexistant dans une quatrième zone D. Un tel système de freinage est imparfait parce que dans la zone A le freinage ne devient pas pleinement efficace rapidement et parce que dans les zones C et D le freinage diminue lorsque le véhicule est à faible vitesse.

Pour remédier à cet inconvénient du freinage électrique par récupération d'énergie, on doit prévoir un système de freinage hydraulique apportant un complément de freinage dans les zones A, C et D.

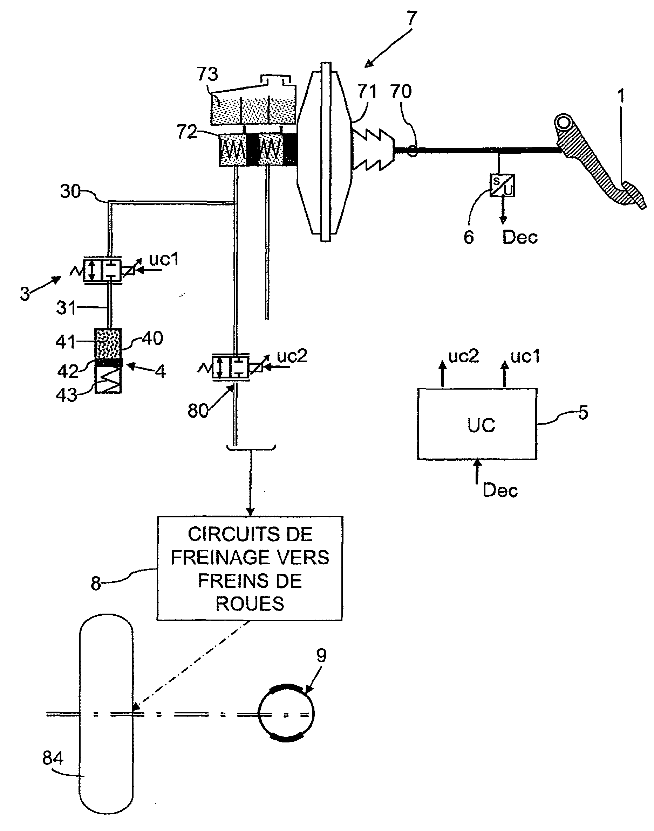

La figure 2 représente des courbes de fonctionnement du système de freinage électrique et du système de freinage hydraulique.

La courbe C1 est la courbe de freinage électrique par récupération d'énergie qui correspond à celle de la figure 1. Si l'on désire obtenir une décélération du véhicule de 0,7g par exemple, et que le système de freinage électrique permet d'obtenir une décélération maximale de 0,3g, il faudra que la courbe du freinage appliquée par le système de freinage hydraulique soit schématiquement celle représentée par la courbe C2. Dans la zone A, le couple de freinage hydraulique permettra dès que possible une décélération de 0,7g puis diminuera jusqu'à ce que le couple de freinage électrique atteigne sa valeur maximale et que la décélération équivalente due à ce couple de freinage électrique soit de 0,3g. De cette façon, à chaque instant, la somme des couples fournis par les systèmes de freinage électrique et hydraulique fournit une décélération de 0,7g. Dans la zone B, le système de freinage hydraulique complète le système de freinage électrique pour obtenir également une décélération de 0,7g. Ensuite, dans la zone C, on a une augmentation du couple de freinage du système hydraulique pour apporter à nouveau un complément de freinage au système de freinage électrique et pour, dans la zone Dl, pallier la quasi inexistence de couple de freinage électrique.

Par ailleurs, outre les temps de réponse du système de freinage électrique par récupération, ce système peut ne pas répondre tout le temps de la même façon en raison de la charge du circuit de récupération d'énergie qui peut varier. C'est le cas notamment dans le cas où le circuit de récupération comporte essentiellement les batteries du véhicule. Dans ce cas la charge peut varier en fonction de l'état des batteries.

Dans de tels systèmes un circuit de commande, un calculateur par exemple, doit gérer les fonctionnements des systèmes de freinage. Ce calculateur est sollicité à chaque freinage.

De façon générale, l'invention est donc applicable à une installation de freinage pour véhicule comportant un système de freinage de service à énergie auxiliaire et un système de freinage à énergie musculaire de type classique utilisé en freinage de secours.

Un organe de commande manuelle tel qu'une pédale de frein actionne le système de freinage de service ou, en cas d'insuffisance ou de défaillance de ce dernier, le freinage de secours.

Le système de freinage classique comporte un maître-cylindre équipé d'au moins un piston primaire et est commandé par l'organe de commande manuelle (pédale de frein).

Par ailleurs, une valve de sécurité au moins permet d'isoler le maître-cylindre des freins de roues lorsque le freinage de service fonctionne normalement. Par contre lorsque l'effort de freinage fourni par le système de freinage à énergie auxiliaire (freinage électrique) est insuffisant ou lorsque ce système de freinage est défaillant, cette valve de sécurité permet de coupler le maître-cylindre à au moins un frein de roue.

Dans de tels systèmes, pour que le conducteur ait une sensation de freinage lorsque le système de freinage à énergie extérieure fonctionne, on prévoit un simulateur de sensation de freinage pour opposer à l'avance de l'organe de commande (pédale de frein), lors d'un freinage de service à énergie auxiliaire, une réaction reflétant le déroulement du freinage.

Couramment, ce simulateur comprend un piston de simulateur qui coulisse dans une chambre. Ce piston est sollicité d'un côté par l'organe de commande manuelle (directement ou indirectement) et d'un autre côté par un moyen d'application d'une force qui simule l'effort de freinage.

Lors du fonctionnement du système de freinage à énergie auxiliaire, le maître-cylindre est donc isolé des freins de roues et le liquide contenu dans le maître-cylindre ne peut refluer vers ces freins. Grâce au simulateur de sensation, l'organe de commande manuelle reçoit un effort qui s'oppose à l'actionnement de l'organe de commande manuelle et qui simule l'effort de freinage. En principe, ce système de simulation permet de créer une loi de variation de la force à exercer sur l'organe de commande manuelle en fonction de la course. Cela procure au conducteur une sensation semblable à celle qui serait obtenue si la pression de liquide dans les freins de roues résultait directement de la pression provenant du maître-cylindre et de l'effort musculaire sur la pédale de frein.

L'invention est également à un système de freinage automatique commandé par exemple par un système de détection tel qu'un radar placé à l'avant du véhicule. Ce système agit par exemple à l'aide d'un système de contrôle dynamique de trajectoire ESP (Electronic Stablity Program en terminologie anglo-saxonne).

Dans les systèmes de simulation connus, la loi de variation de la force à exercer sur la pédale de frein est déterminée principalement par un moyen de rappel élastique, généralement formé par un ressort, et la loi ne peut pas être modifiée de manière simple et rapide ce qui est un inconvénient. De plus, ce moyen de rappel élastique peut avoir des caractéristiques qui varient dans le temps ou selon le type de véhicule.

Le document FR 2 874 880 décrit un système de freinage équipé d'un moyen de simulation de la sensation de pédale par la régulation du flux de retour du maître-cylindre tandem vers le réservoir et créant ainsi dans le maître-cylindre tandem la pression que doit percevoir la pédale par l'intermédiaire de la tige de poussée.

L'invention a pour but de résoudre ces inconvénients des solutions de l'état de la technique.

### Exposé de l'invention

L'invention concerne un système de simulation de sensation de freinage pour installation de freinage de véhicule comprenant un maître-cylindre de frein commandé par une tige de poussée commandée par une pédale actionnée par le conducteur.

Selon une forme de réalisation préférée de l'invention le taux d'ouverture de la vanne de simulation permet de simuler un effort à la pédale de frein, ladite vanne de simulation étant commandée par une unité centrale de commande en fonction de l'actionnement dudit organe de commande.

Avantageusement, l'unité de commande centrale réalise une commande numérique de la valve de simulation selon un taux de modulation correspondant à la commande de freinage du système de freinage auxiliaire.

Selon une variante de réalisation du système de l'invention, l'unité de commande centrale réalise une commande analogique de la valve de simulation selon un taux d'ouverture de la vanne de simulation qui correspond à la commande de freinage du système de freinage auxiliaire.

Selon une forme de réalisation de l'invention, le système comporte au moins une vanne d'isolation du fonctionnement du circuit hydraulique de freinage, cette vanne d'isolation étant commandée à l'état d'isolation par l'unité centrale de commande lorsque le système de simulation est actionné.

On pourra prévoir avantageusement que le réservoir de stockage comporte une enceinte qui communique par la valve de simulation avec le circuit hydraulique de freinage, un piston poussé par un dispositif élastique fermant ladite deuxième chambre sans opposer quasiment d'effort au déplacement du fluide du circuit hydraulique de freinage vers le réservoir de stockage.

Dans une application courante, le système de freinage à énergie auxiliaire est un système de freinage électrique à récupération d'énergie.

L'invention est également applicable à un système de simulation de sensation de freinage dans lequel le véhicule est à traction mixte et possède un ou des moteurs électriques ainsi qu'un moteur à combustion interne. Le circuit hydraulique de freinage de chaque roue utilisée pour le freinage du véhicule est équipé d'une vanne d'isolation dudit circuit hydraulique.

On pourra alors prévoir un détecteur de déplacement de la tige de commande de freinage fournissant un signal de détection de déplacement qui est transmis à l'unité centrale de commande, laquelle commande l'ouverture et/ou la fermeture de la vanne de simulation.

L'invention est également applicable à un véhicule équipé d'un système de commande de freinage automatique dans lequel la vanne de simulation est connectée à l'un au moins des circuits de freinage du véhicule.

Un tel système comporte avantageusement un capteur de mesure du déplacement de la tige de commande du système de freinage hydraulique du véhicule, ainsi qu'un capteur de pression de mesure de la pression dans le circuit hydraulique de freinage du véhicule.

Avantageusement un capteur de pression mesure la pression dans le réservoir de stockage.

L'invention est également applicable à un procédé de commande du système de simulation ainsi décrit. Ce procédé comporte alors une étape de détermination d'une course cible de l'organe commande en fonction de la pression dans le circuit hydraulique de freinage et une étape d'ouverture de la vanne de simulation tant que la course réelle de la tige de commande est inférieure à la course cible.

Avantageusement, ce procédé utilise une table permettant de déterminer l'ouverture de la vanne de simulation en fonction de la différence existant entre la course cible et la course réelle de la tige de commande.

Suivant une autre caractéristique, la commande de la vanne de simulation est fonction de la pression détectée par le détecteur de pression et la vitesse de déplacement de la tige de commande.

Selon une autre caractéristique, l'ouverture de la vanne est pondérée par la vitesse de déplacement de la tige de commande.

Ou bien encore, on peut également prévoir que l'ouverture de la vanne est pondérée par le gradient de pression dans le circuit de freinage du véhicule.

Selon une variante, le procédé de commande du système de simulation a une étape permettant de déterminer une valeur de pression à atteindre dans le réservoir de stockage en fonction de la pression mesurée par le capteur de pression dans le circuit hydraulique de freinage et une étape d'ouverture de la vanne de simulation tant que la pression réelle dans le réservoir de stockage est inférieure à la pression cible.

Selon cette variante de procédé, une table permet de déterminer l'ouverture de la vanne de simulation en fonction de la différence existant entre la pression cible et la pression réelle dans le réservoir de stockage.

Selon cette variante de procédé, la fermeture de la vanne de simulation se fait à une vitesse qui dépend du gradient de pression dans le circuit hydraulique.

L'invention a aussi pour objet un système de freinage caractérisé en ce qu'il comporte un système de simulation selon l'invention relié aux freins des roues d'un véhicule automobile à travers des vannes ouvertes au repos d'une unité hydraulique de manière à ce que le maître-cylindre génère en freinage de secours la génération de pression hydraulique dans les freins, lesdites vannes de ladite unité hydraulique étant fermées en freinage de service, durant lequel la génération de pression dans les freins est assurée par ladite unité hydraulique.

L'invention a également pour objet un véhicule automobile caractérisé en ce qu'il comporte un système de simulation selon la présente invention et/ou un système de freinage selon l'invention.

L'invention a aussi pour objet un tel véhicule automobile comportant un système de freinage selon l'invention, caractérisé en ce qu'il comporte un moteur thermique et un moteur électrique, en ce qu'en freinage le moteur électrique fonctionne en tant que générateur et en ce que l'unité hydraulique génère lors d'un freinage une pression hydraulique assurant un freinage par les freins, complémentaire du freinage assuré par le moteur électrique, pour que le freinage total désiré soit égale à la somme du freinage par les freins et par le moteur électrique.

### Description des figures

L'invention apparaîtra plus clairement dans la description des figures annexées dans lesquelles:
- les figures 1 et 2 montrent des courbes de fonctionnement déjà décrites précédemment,
- la figure 3 montre un exemple de réalisation simplifié du système de simulation de freinage selon l'invention,
- la figure 4 montre un exemple détaillé du système de simulation selon l'invention,
- la figure 5 montre un exemple de réalisation du système de l'invention appliqué à un système de freinage automatique.

### Description détaillée de modes de réalisation

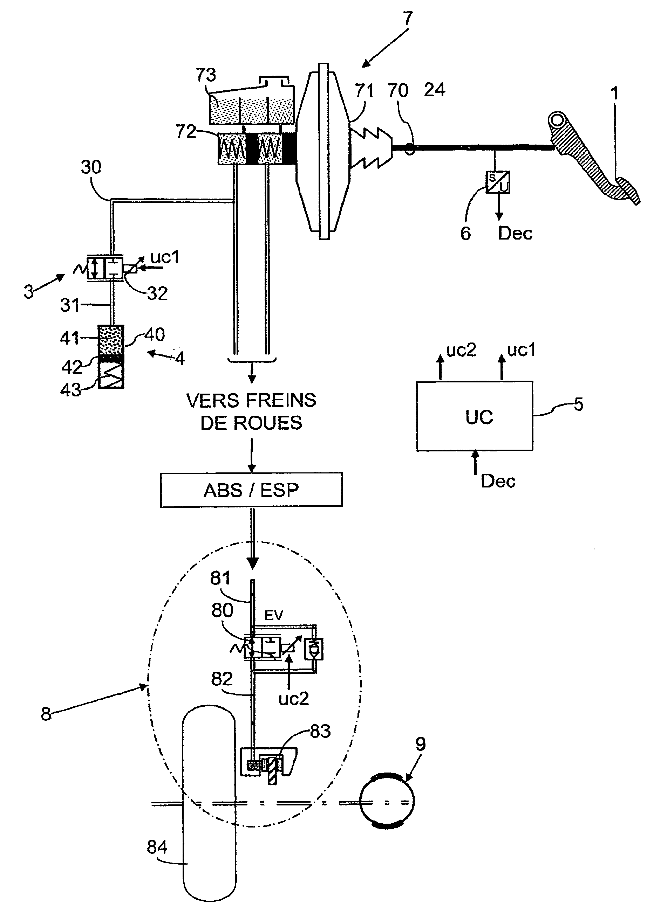

Selon la figure 3, un exemple de réalisation du système de l'invention sera décrit dans son application à un véhicule à traction mixte à moteur de traction à combustion interne et à un ou plusieurs moteurs de traction électriques. Il est connu, dans un tel véhicule d'utiliser les moteurs électriques en génératrices de courant électrique pour freiner le véhicule. L'énergie électrique récupérée sert à recharger les batteries du véhicule. Cependant, la force de freinage peut n'être pas suffisante en cas de freinage d'urgence, elle est également insuffisante à faible vitesse et, de toutes façon elle dépend de l'état de charge des batteries. Un tel véhicule possède alors généralement, en outre, un système de freinage classique tel qu'un système de freinage hydraulique dont l'effort de freinage résulte au moins partiellement de l'effort exercé par le conducteur sur la pédale de frein. Le système de freinage normalement utilisé est le système de freinage électrique par récupération d'énergie, puis en cas de besoin, le système de freinage hydraulique est mis en service. Ces systèmes de freinage sont gérés par une unité de commande centrale qui décide du fonctionnement du système de freinage hydraulique. Ces systèmes sont connus dans la technique et n'ont donc pas besoin d'être décrits.

Lorsque le système de freinage électrique est utilisé, on doit prévoir un système de simulation qui oppose un effort au déplacement de la pédale de frein lorsque le conducteur appuie sur cette pédale de frein. Cela a pour effet de simuler l'effort de freinage à l'intention du conducteur.

Le système de la figure 3 comporte un servomoteur d'assistance au freinage 7 commandé par une tige de commande 70 actionnée par un organe de commande tel qu'une pédale de frein 1. Le servomoteur 7 commande un maître cylindre de frein 72 lequel génère une pression de freinage dans les circuits hydrauliques de freinage des freins de roues du véhicule.

Le système de l'invention comporte en outre une vanne hydraulique 3 reliée par une canalisation 30 à au moins un circuit hydraulique de freinage du véhicule avantageusement au circuit secondaire. Cette vanne permet de connecter le circuit hydraulique de freinage à un accumulateur haute pression 4.

La canalisation 30 comporte une vanne d'isolation 80.

L'ensemble du système est géré par une centrale de commande 5.

On va maintenant décrire le fonctionnement du système.

Lorsque le conducteur appuie sur la pédale de frein 1, un détecteur 6 détecte par exemple l'effort exercé sur la pédale de frein et transmet un signal de détection Dec à la centrale de commande 5. Celle-ci commande le fonctionnement du moteur électrique 9 en générateur électrique de manière connue dans la technique.

Simultanément, la centrale de commande 5 transmet un signal de simulation uc1 à la vanne de simulation 3 pour commander son ouverture. Les caractéristiques de ce signal sont fonction de l'importance du déplacement de la pédale de frein. L'ouverture de la vanne 3 est donc fonction du signal uc1.

Par ailleurs, l'unité centrale de commande transmet un signal d'isolation uc2 à la vanne d'isolation 80. Le circuit hydraulique de freinage auquel est raccordée la vanne 3 est donc isolé.

Les pistons du maître cylindre 72 peuvent se déplacer en fonction de l'ouverture de la vanne 3. Il en est de même de la tige de commande 70.

De ce fait, lorsque le conducteur appuie sur la pédale de frein, il commande le déplace des piston du maître cylindre 72. Dans l'exemple de réalisation de la figure 3, le piston secondaire du maître cylindre pousse le liquide de frein, par la vanne 3, vers l'accumulateur 4.

Comme on l'a vu précédemment l'ouverture de la vanne 3 est fonction de la caractéristique du signal uc1 et cette vanne peut limiter le débit du fluide de freinage et par suite influer sur le déplacement de la pédale de frein.

Le signal uc1 fourni par l'unité centrale de commande 5 peut être un signal numérique (ou impulsionnel) la fréquence de répétition des impulsions étant alors fonction de la consigne de freinage exercée sur la pédale de frein.

Par exemple, pour un effort faible exercé sur la pédale de frein, la valeur du signal uc1 sera faible pour obtenir un faible taux d'ouverture de la vanne 32 et par suite un faible déplacement de la pédale.

A l'inverse, en réponse à un effort de freinage important on obtient un déplacement important de la pédale de frein, car la valeur du signal uc1 sera élevée pour obtenir un taux d'ouverture élevé de la vanne 32.

Selon une variante de réalisation, le signal uc1 fourni par l'unité centrale de commande 5 est un signal analogique. L'amplitude de ce signal détermine l'ouverture plus ou moins importante de la vanne 3 pour opposer un effort plus ou moins important au déplacement de la pédale de frein et pour permettre un enfoncement plus ou moins important de la pédale.

L'accumulateur 4 comporte une enceinte 40 dont le volume peut varier en fonction de la quantité de fluide de freinage 41 injecté par le maître cylindre 72 à travers la vanne 3. Le volume de l'enceinte 40 est délimitée par un piston mobile 42. Avantageusement un organe de maintien 43 évite un déplacement libre du piston 42 dans l'enceinte 40.

Par ailleurs, des vannes d'isolation, telle que la vanne 80 permettent d'isoler le circuit hydraulique de freinage du véhicule.

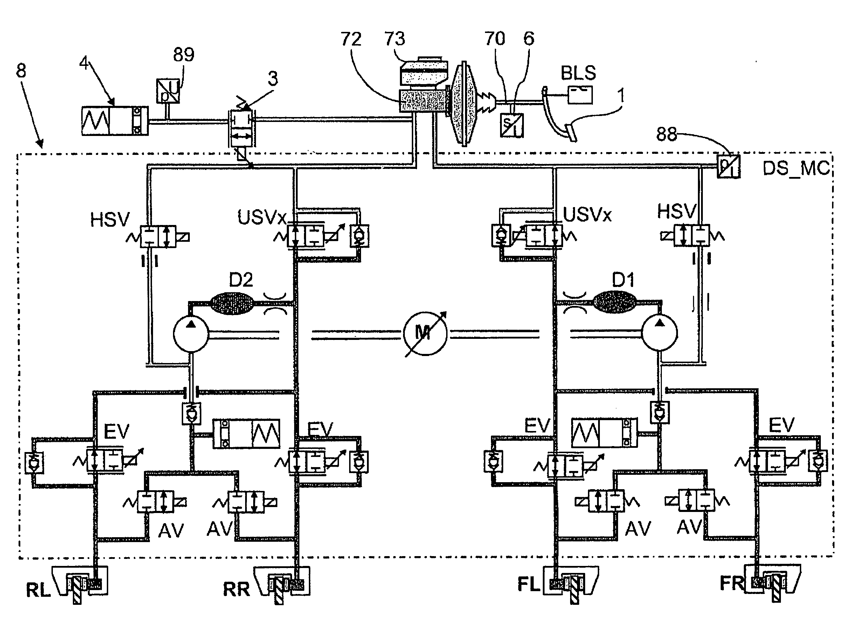

La figure 4 représente un exemple de réalisation détaillé d'un système de simulation selon l'invention appliqué à un véhicule équipé d'un système de freinage électrique par récupération d'énergie et d'un système de freinage hydraulique classique.

Sur la figure 4, on n'a représenté qu'une seule roue 84 et son dispositif de freinage 83. Une vanne d'isolation 80 est prévue sur les canalisations 81 et 82 reliant le dispositif de freinage 83 au maître cylindre de frein 72.

Le véhicule étant à traction mixte, on a représenté un moteur électrique 9 entraînant la roue 84.

Lors d'un freinage électrique du véhicule commandé par l'actionnement de la pédale et par la détection de son déplacement ou, avantageusement de l'effort exercé, l'unité centrale de commande 5 génère un signal UC2 d'isolement du système de freinage hydraulique par action sur la vanne 80. Parallèlement, l'unité centrale 5 commande l'ouverture de la vanne 3 comme cela a été décrit précédemment.

Le système de l'invention permet de simuler un comportement habituel de la pédale de frein bien que l'effort de freinage appliqué aux roues du véhicule fourni par une source d'énergie (freinage électrique) ne résulte pas de l'effort nécessaire à l'enfoncement de la pédale de frein.

Dans la description qui précède, pour simplifier, on a considéré que lorsque le freinage électrique est actif, le système de freinage hydraulique est bloqué. Cependant, sans sortir du cadre de l'invention, on peut également prévoir un fonctionnement limité du système de freinage hydraulique qui permet de compenser une insuffisance de l'effort de freinage du système de freinage électrique.

Dans cette description, on a considéré que le système de freinage à énergie auxiliaire est un système de freinage électrique par récupération d'énergie, mais l'invention est applicable à tout autre système de freinage.

La figure 5 représente une variante de réalisation du système de la figure 4 dans laquelle la vanne 3 permet de connecter le circuit hydraulique de freinage à un accumulateur 4 de manière similaire au système de la figure 3. Ce système comporte en outre un capteur de pression 89 permettant de mesurer la pression dans l'accumulateur 4.

Dans ce système, plusieurs procédés de commande de la vanne 3 peuvent également être envisagés lors du fonctionnement du système de freinage hydraulique.

Selon un premier procédé une course cible est estimée en fonction de la pression mesurée par le capteur de pression 88 dans le circuit hydraulique de freinage relativement à une caractérisation quasi-statique.

Durant la phase de freinage, le capteur 6 détecte l'effort exercé sur la tige 70 dont la course réelle est comparée à la course cible et la vanne de simulation 3 est ouverte tant que la course réelle est inférieure à la course cible.

Par ailleurs le système possède une table qui fournit le taux d'ouverture de la vanne 3 en fonction de la différence entre la course réelle et la course cible. Cela permet d'assurer une progressivité de la fermeture de la vanne 3 et de minimiser la pression sur la pédale de frein.

Selon un deuxième procédé, il est également prévu d'estimer une course cible en fonction de la pression mesurée par le capteur de pression 88 dans le circuit hydraulique de freinage. Tant que la course réelle est inférieure à la course cible, la vanne de simulation est ouverte mais sa commande est pondérée par la vitesse de déplacement de la tige de poussée 70. Quand la course réelle atteint la course cible, la vanne de simulation 3 est fermée progressivement selon une caractéristique qui tient compte du gradient de pression dans le circuit de freinage.

Selon un troisième procédé, une valeur de pression à atteindre dans l'accumulateur 4, appelée pression cible , est estimée en fonction de la pression dans le circuit de freinage qui est mesurée par le capteur 88.

Durant la phase de freinage, la pression réelle mesurée dans l'accumulateur par le capteur 89 est comparée à la pression cible. Tant que la pression réelle est inférieure à la pression cible, la vanne de simulation 3 est ouverte.

Par ailleurs, une table fournit le taux d'ouverture de la vanne 3 en fonction de la différence entre la pression réelle et la pression cible dans l'accumulateur 4. Cela assure un fonctionnement progressif de la vanne 3 entre l'état d'ouverture et l'état de fermeture.

Selon un quatrième procédé, comme dans le troisième procédé, on détermine une pression cible en fonction de la pression dans le circuit hydraulique et on maintient la vanne 3 ouverte tant que la pression réelle est inférieure à la pression cible. Lorsque la pression réelle atteint la pression cible on commande la fermeture de la vanne à une vitesse qui dépend du gradient de pression mesurée dans le circuit hydraulique de freinage.

Bien que la présente invention a été décrite en mettant en oeuvre des vannes à commande à largeur d'impulsion (PWM en terminologie anglo-saxonne) la mise en oeuvre de vannes proportionnelles ne sort pas du cadre de la présente invention.

## Revendications

1. Système de simulation de sensation de freinage pour installation de freinage de véhicule comprenant un maître-cylindre de frein (72) commandé par une tige de poussée commandée par une pédale (1) actionnée par le conducteur, **caractérisé en ce qu'**il comporte
* un accumulateur (4) de liquide de frein sous pression connecté par une canalisation (30) et par une vanne de simulation (3) au circuit hydraulique de freinage (8) en sortie du maître-cylindre (72)
- un capteur (6) de l'effort exercé sur la pédale (1), Générant un signal représentatif de cet effort,
- une unité centrale (5) reliée au capteur (6) et à l'accumulateur (4),
* l'unité centrale (5) élaborant à partir du signal (Dec) reçu du capteur (6) un signal de commande (UC1) d'ouverture de la vanne de simulation (3),
* l'ouverture de la vanne de simulation (3) permettant d'évacuer sur commande (UC1) un volume de liquide de frein d'au moins une chambre du maître-cylindre (72) en fonction de la consigne de freinage exercée sur la pédale de frein (1) de manière à permettre l'enfoncement de la pédale, et créer la sensation de freinage.

2. Système de simulation selon la revendication 1,
**caractérisé en ce que**
l'accumulateur de pression est équipé d'un capteur de pression (89) détectant la pression dans l'accumulateur (4).

3. Système de simulation selon la revendication 1,
**caractérisé en ce que**
la vanne de simulation (3) commandée par l'unité centrale de commande (5) a un taux d'ouverture simulant l'effort à la pédale de frein.

4. Système de simulation selon la revendication 1,
**caractérisé en ce que**
l'unité de commande centrale (5) effectue une commande numérique de la vanne de simulation (3) selon un taux de modulation correspondant à la commande de freinage d'un système de freinage auxiliaire (9).

5. Système de simulation selon la revendication 1,
**caractérisé en ce que**
l'unité de commande centrale (5) effectue une commande analogique de la vanne de simulation (3) selon un taux d'ouverture qui correspond à la commande de freinage d'un système de freinage auxiliaire (9).

6. Système de simulation selon la revendication 1,
**caractérisé par**
au moins une vanne d'isolation (80) du fonctionnement du circuit hydraulique de freinage, cette vanne d'isolation (80) étant commandée à l'état d'isolation par l'unité centrale de commande (5) lorsque le système de simulation est actionné.

7. Système de freinage,
**caractérisé en ce qu'**
il comporte un système de simulation selon les revendications précédentes 1 à 6 relié aux freins de roues d'un véhicule automobile à travers des vannes (USVx, EV) ouvertes au repos d'une unité hydraulique de manière à ce que le maître-cylindre (72) génère en freinage de secours la pression hydraulique dans les freins, les vannes (USVx, EV) de l'unité hydraulique étant fermées en freinage de service, durant lequel la génération de pression dans les freins est assurée par l'unité hydraulique.

8. Véhicule automobile,
**caractérisé en ce qu'**
il comporte un système de freinage selon la revendication 7 comportant un moteur thermique et un moteur électrique, **en ce qu'**en freinage, le moteur électrique fonctionne en tant que générateur et **en ce que** l'unité hydraulique génère lors d'un freinage, une pression hydraulique assurant un freinage par les freins, complémentaire du freinage assuré par le moteur électrique, de manière à ce que le freinage total désiré soit égal à la somme du freinage par les freins et de celui par le moteur électrique.

## Patentansprüche

1. System zur Simulation eines Bremsgefühls für eine Fahrzeug-Bremsanlage, die einen Hauptbremszylinder (72) enthält, der von einer von einem vom Fahrer betätigten Pedal (1) gesteuerten Schubstange gesteuert wird, **dadurch gekennzeichnet, dass** es aufweist
- einen Speicher (4) einer unter Druck stehenden Bremsflüssigkeit, der durch eine Rohrleitung (30) und durch ein Simulationsventil (3) mit dem Bremshydraulikkreis (8) am Ausgang des Hauptzylinders (72) verbunden ist,
- einen Sensor (6) der auf das Pedal (1) ausgeübten Kraft, der ein für diese Kraft repräsentatives Signal erzeugt,
- eine mit dem Sensor (6) und mit dem Speicher (4) verbundene Zentraleinheit (5),
* wobei die Zentraleinheit (5) ausgehend von dem vom Sensor (6) empfangenen Signal (Dec) ein Steuersignal (UC1) zum Öffnen des Simulationsventils (3) erzeugt,
* wobei das Öffnen des Simulationsventils (3) es ermöglicht, bei einer Steuerung (UC1) abhängig von dem auf das Bremspedal (1) ausgeübten Bremswert ein Bremsflüssigkeitsvolumen aus mindestens einer Kammer des Hauptzylinders (72) abzuführen, um das Eindrücken des Pedals zu erlauben und das Bremsgefühl zu erzeugen.

2. Simulationssystem nach Anspruch 1, **dadurch gekennzeichnet, dass** der Druckspeicher mit einem Drucksensor (89) ausgestattet ist, der den Druck im Speicher (4) erfasst.

3. Simulationssystem nach Anspruch 1, **dadurch gekennzeichnet, dass** das durch die zentrale Steuereinheit (5) gesteuerte Simulationsventil (3) einen Öffnungsgrad hat, der die Krafteinwirkung auf das Bremspedal simuliert.

4. Simulationssystem nach Anspruch 1, **dadurch gekennzeichnet, dass** die zentrale Steuereinheit (5) eine digitale Steuerung des Simulationsventils (3) gemäß einem Modulationsgrad entsprechend der Bremssteuerung eines Hilfsbremssystems (9) ausführt.

5. Simulationssystem nach Anspruch 1, **dadurch gekennzeichnet, dass** die zentrale Steuereinheit (5) eine analoge Steuerung des Simulationsventils (3) gemäß einem Öffnungsgrad ausführt, der der Bremssteuerung eines Hilfsbremssystems (9) entspricht.

6. Simulationssystem nach Anspruch 1, **gekennzeichnet durch** mindestens ein Isolierventil (80) des Betriebs des Bremshydraulikkreises, wobei dieses Isolierventil (80) **durch** die zentrale Steuereinheit (5) in den Isolierzustand gesteuert wird, wenn das Simulationssystem betätigt wird.

7. Bremssystem, **dadurch gekennzeichnet, dass** es ein Simulationssystem nach den vorhergehenden Ansprüchen 1 bis 6 aufweist, das mit den Radbremsen eines Kraftfahrzeugs über in der Ruhestellung offene Ventile (USVx, EV) einer Hydraulikeinheit verbunden ist, damit der Hauptzylinder (72) bei einer Notbremsung den Hydraulikdruck in den Bremsen erzeugt, wobei die Ventile (USVx, EV) der Hydraulikeinheit bei einer Betriebsbremsung geschlossen sind, während der die Druckerzeugung in den Bremsen durch die Hydraulikeinheit gewährleistet wird.

8. Kraftfahrzeug, **dadurch gekennzeichnet, dass** es ein Bremssystem nach Anspruch 7 aufweist, das einen Verbrennungsmotor und einen Elektromotor aufweist, dass bei der Bremsung der Elektromotor als Generator arbeitet, und dass die Hydraulikeinheit bei einer Bremsung einen Hydraulikdruck erzeugt, der eine Bremsung durch die Bremsen komplementär zur vom Elektromotor gewährleisteten Bremsung gewährleistet, damit die gewünschte Gesamtbremsung gleich der Summe der Bremsung durch die Bremsen und derjenigen durch den Elektromotor ist.

## Claims

1. Braking force feeling simulation system for vehicle brake installation comprising a brake master cylinder (72) controlled by a thrust rod controlled by a pedal (1) actuated by the driver,
**characterized in that** it comprises
• a pressurized brake fluid accumulator (4) connected by a pipeline (30) and by a simulation valve (3) to the hydraulic brake circuit (8) at the output of the master cylinder (72)
- a sensor (6) of the force exerted on the pedal (1), generating a signal representative of this force,
- a central unit (5) linked to the sensor (6) and to the accumulator (4),
• the central unit (5) generating, from the signal (Dec) received from the sensor (6), a control signal (UC1) to open the simulation valve (3),
• the opening of the simulation valve (3) making it possible to discharge, on command (UC1), a volume of brake fluid from at least one chamber of the master cylinder (72) as a function of the braking set point exerted on the brake pedal (1) so as to make it possible to depress the pedal, and create the braking sensation.

2. Simulation system according to Claim 1,
**characterized in that**
the pressure accumulator is equipped with a pressure sensor (89) detecting the pressure in the accumulator (4).

3. Simulation system according to Claim 1,
**characterized in that**
the simulation valve (3) controlled by the central control unit (5) has an aperture ratio simulating the force on the brake pedal.

4. Simulation system according to Claim 1,
**characterized in that**
the central control unit (5) performs a digital control of the simulation valve (3) according to a modulation ratio corresponding to the braking control of an auxiliary brake system (9).

5. Simulation system according to Claim 1,
**characterized in that**
the central control unit (5) performs an analogue control of the simulation valve (3) according to an aperture ratio which corresponds to the braking control of an auxiliary brake system (9).

6. Simulation system according to Claim 1,
**characterized by**
at least one shut-off valve (80) shutting off the operation of the hydraulic braking circuit, this shut-off valve (80) being commanded to the shut-off state by the central control unit (5) when the simulation system is actuated.

7. Braking system,
**characterized in that**
it comprises a simulation system according to the preceding Claims 1 to 6 linked to the wheel brakes of a motor vehicle through valves (USVx, EV) that are open at rest of a hydraulic unit so that the master cylinder (72) generates, in emergency braking mode, the hydraulic pressure in the brakes, the valves (USVx, EV) of the hydraulic unit being closed in service braking mode, during which the generation of pressure in the brakes is ensured by the hydraulic unit.

8. Motor vehicle,
**characterized in that**
it comprises a braking system according to Claim 7 comprising a heat engine and an electric motor, **in that**, in braking mode, the electric motor operates as generator and **in that** the hydraulic unit generates, when braking, a hydraulic pressure ensuring a braking by the brakes, complementing the braking ensured by the electric motor, so that the desired total braking is equal to the sum of the braking by the brakes and of that by the electric motor.
